# EUROPEAN PATENT SPECIFICATION

(11) **EP 3 003 713 B1**
(45) Date of publication and mention of the grant of the patent: **14.06.2017**
(21) Application number: 14722166.7
(22) Date of filing: 30.04.2014
(51) Int. Cl.: B32B 13/12, B32B 13/02, B32B 3/06, B32B 3/28, B32B 3/30, E04D 3/35

(54) **INSULATED CORRUGATED FIBER CEMENT SHEET, AND METHOD FOR PRODUCING SAME**
ISOLIERTE, GEWELLTE FASERZEMENTPLATTE UND VERFAHREN ZUR HERSTELLUNG DAVON
FEUILLE DE FIBROCIMENT ONDULÉE ISOLÉE ET SON PROCÉDÉ DE PRODUCTION

(30) Priority: 07.06.2013 EP 13171158
(43) Date of publication of application: 13.04.2016
(60) Divisional application: 16178021.8
(73) Proprietor: ETEX SERVICES NV, 1880 Kapelle-op-den-Bos (BE)
(72) Inventor: BAKKER, Gerald, NL-7514 AG Enschede (NL)
(74) Representative: Vaeck, Elke
(86) International application number: PCT/EP2014/058936
(87) International publication number: WO 2014/198454

(56) References cited:
- EP-A1- 0 271 049
- DE-A1- 2 613 157
- FR-A1- 2 646 454
- US-A- 4 558 550

## Description

### Field of the invention

The invention relates to the field of pre-insulated corrugated fiber cement sheets, and to methods of making same, and to a thermal insulation panel used therein.

### Background of the invention

Corrugated fiber cement sheets, sometimes also referred to as undulated fiber cement sheets, as well as methods for producing them, are well known in the art. Corrugated fiber cement sheets are commonly used for forming a roof, such as for example a roof of a stable or shelter. In addition to the fiber-reinforcement, the corrugations offer good mechanical strength, and provide for drainage of rain.

A problem of such roofs however, is that the space underneath can become very hot in summer. In case roofs of stables are envisaged, the latter may have strongly negative effects, e.g. it may result in a lower milk production if cows are staying in a stable that is too warm.

A number of solutions has been provided in the last years.

In one known solution, a thermal insulation under-roof is generated using insulation sheets and a roof of corrugated fiber cement sheet is arranged on top thereof. A disadvantage of such an arrangement is that the insulation panels and the fiber cement sheets need to be transported, sized, arranged, and secured individually, which is labor intensive. This method however requires several consecutive manipulations, which is typically time consuming and labor intensive.

Another known technique is to produce a pre-insulated fiber cement sheet, including the step of completely filling the undulations at the bottom side of the fiber cement sheet with a Poly-Urethane foam. However, it was found that such a pre-insulated fiber cement sheet may show cracks and/or slits during actual use under varying weather conditions, which severely reduces the lifetime of the fiber cement sheet.

Investigations of this premature failure have led to the believe that the cause of failure is due to the fact that the fiber cement sheet cannot "breathe" at the bottom side (i.e. the side of the fiber cement sheet facing the ground). Fiber cement products shrink when they dry, and expand when they get wet. In addition, the CA(OH)₂ in the cement is gradually converted into calcium carbonate CaCO₃, during which conversion carbon dioxide CO₂ is absorbed. This aging process is very slow, but will effectively shrink the fiber cement sheet.

It was also noticed that too different expansion of fiber cement sheet and thermally insulating material jeopardized the life time of the pre-insulated fiber cement sheet. DE2613157 discloses a method of producing an insulated corrugated fiber cement sheet, comprising the steps of: providing the corrugated fiber cement sheet having undulations; adhering an intermediate sheet to the crests of the undulations by means of an adhesive layer; applying and curing a foamed composition to the side of the intermediate sheet opposite the corrugated fiber cement sheet to obtain a cured thermal insulation panel, so that the obtained thermal insulation panel partly engages with the undulations of the corrugated fiber cement sheet while leaving openings between the thermal insulation panel and the corrugated fiber cement sheet for allowing air flow on both sides of the fiber cement sheet.

### Summary of the invention

In order to overcome this premature failure, an insulated corrugated fiber cement sheet is provided.

It is an object of the present invention to provide an insulated corrugated fiber cement sheet comprising a substantially flat insulation panel adhering to the extremities of the substantially sinusoidal undulations at the bottom side of the fiber cement sheet. As such, space under the undulations is left open for allowing the fiber cement sheet to "breath", i.e. to allow the fiber cement sheet to exchange heat and/or moisture with the environment up to equilibrium, at both sides (the upper side which is exposed to sun and rain, but also the bottom side whereto the insulation panel is attached).

This insulated corrugated fiber cement sheet enables to reduce the number of manipulations when installing a thermally insulated roof, as compared to the installation of thermal insulation and a fiber cement outer roof layer separately.

When these panels are exposed to varying environmental conditions (temperature, humidity), the insulation panel may sometimes break and /or the adhesive layer between the fiber cement sheet and the insulation panel may crack.

It is a further object of the present invention to provide a method for making a good pre-insulated corrugated fiber cement sheet as well as to provide good pre-insulated corrugated fiber cement sheets. It is a further object of the present invention to provide an insulating panel especially adapted for producing said insulated corrugated fiber cement sheet.

These objectives are accomplished by a method and devices according to embodiments of the present invention.
The present invention relates to a method of producing an insulated corrugated fiber cement sheet, comprising the steps of:
a) providing a cured corrugated fiber cement sheet;
b) shrinking of the cured corrugated fiber cement sheet, thereby providing a pre-shrunk corrugated fiber cement sheet having a residual shrinkage in the direction of the corrugation is less than 4mm/m ;
c) adhering a thermal insulation panel comprising a plurality of elongated recesses to one side of the pre-shrunk corrugated fiber cement sheet having undulations thereby providing said insulated corrugated fiber cement sheet, the recesses having a shape for partly engaging with the undulations of the pre-shrunk corrugated fiber cement sheet while leaving openings between the thermal insulation panel and the pre-shrunk corrugated fiber cement sheet for allowing air flow on both sides of the fiber cement sheet.

The cured corrugated fiber cement sheet typically may comprise organic and/or synthetic fibers such as organic and/or synthetic fibers selected form the group consisting of cellulose fibers, polyvynilalcohol fibers, polyacrilonitrile fibers, polypropylene fibers, polyamide fibers, polyester fibers, polycarbonate fibers and combinations thereof.

The adhesive or adhesives used in the step of adhering the thermal insulation panel comprising a plurality of elongated recesses to one side of the pre-shrunk corrugated fiber cement sheet may be an adhesive selected from the group consisting of hot-melt adhesives, such as polyolefin-, polyamide-, polyester- and other hot melt adhesives; contact adhesives such as polystyrene based contact glues and other contact adhesives; polyurethane adhesives (either mono- or bicomponent polyurethane adhesives); epoxy adhesives (either mono- or bi-component epoxy adhesives; silicone and modified silicone adhesives such as modified silane polymer adhesives; acrylic adhesives; Ethylene-vinyl acetate adhesives; phenolic adhesives, elastomer adhesives such as neoprene elastomer adhesives, butyl elastomer adhesives, and others elastomer adhesives; bituminous adhesives; melamine adhesives and any other suitable adhesives. More preferred, hot-melt adhesives, such as polyolefin-, polyamide-, polyester- and other hot melt adhesives; contact adhesives such as polystyrene based contact glues and other contact adhesives and/or polyurethane adhesives (either mono- or bi-component polyurethane adhesives) are used. Most preferred are adhesives which are solvent free and/or high tack adhesives, providing bondage between the panel and the fiber cement sheet within few seconds, such as within less than 10 seconds.

The thermal insulation panel may be made of an insulation material chosen from any stiff insulation material, such as chosen from the group consisting of polyurethane (PUR), poly-isocyanurate (PIR), extruded polystyrene (XPS), expanded polystyrene (EPS), other suitable materials, and combinations thereof.

In embodiments of the present invention, the cured corrugated fiber cement sheet may be shrunk, thereby providing a pre-shrunk corrugated fiber cement sheet having a residual shrinkage of less than 3.75mm/m, even less than 3.5mm/m, such as less than 3.25mm/m or even less than 3mm/m.

In embodiments of the present invention, reducing the shrinkage of the cured corrugated fiber cement sheet is comprises reducing the moisture content of the cured corrugated fiber cement sheet to an amount less than 12%w, thereby providing the pre-shrunk corrugated fiber cement sheet.

The step of lowering the moisture content may be performed by placing the cured corrugated fiber cement sheet in an oven a having a temperature in the range of 35°C to 65°C, for a period of at least 24 hours.

The method used for determining the residual shrinkage of a sheet is done by
- placing marks at the extremes of two crests of the corrugation, said crests being at the same side of the sheet and being not adjacent one to the other;
- measuring the distance between said marks providing distance value D1;
- drying the sheet at 105°C in a ventilated oven and monitor the weight of the sheet until the difference in weight between subsequent weight determinations done with a time difference of 24h is less than 0.5%;
- measuring the distance between said marks providing distance value D2;
calculating the residual shrinkage being 1000*(D2-D1)/D2.The method used for determining the moisture content, is to sample a sheet and sample a representative piece, measure the weight of the sampled piece and put the sampled piece into an oven of 105°C. After at least 12h the weight is measured again and the moisture content is calculated. The moisture content hence is expressed as weight % or %w, expressed as the moisture over the weight of the sheet after said drying at 105°C.

It is an advantage of embodiments of the present invention that the residual shrinkage of the pre-shrunk sheet is brought to a low level, such as by reducing the moisture content of the corrugated fiber cement sheet , before (preferably shortly before) the adhesive is applied. Tests have shown that this additional step dramatically reduced the failure rate caused by cracks and/or slits of the insulation panel itself, and/or the adhesive layer, probably due to a reduction of residual stresses caused by further shrinking and/or expansion when the moisture content comes in equilibrium with the environment.

It is an advantage of embodiment of the present invention that a recessed connection is provided between the insulation panel and the fiber cement sheet, for allowing an increased contact area, which reduces the stress in and near the adhesive layer acting as interface layer. It is a further advantage of the recesses in that the angular position of an imaginary plane tangential to the local contact surface provides not only in shear forces, but also in compression forces, to which the adhesive layer may be better resistant.

The recesses in the insulation panel may be provided during manufacture of the insulation panel (using dedicated moulds), or may be provided after hardening of standard size insulation panels, e.g. by butting and/or milling.

It is an advantage of embodiments of the present invention that the recesses do not fill the entire hollow space formed by the undulations, but only part thereof, thus leaving openings through which air can flow underneath the fiber cement sheet. This allows the moisture content within the fiber cement sheet to better adapt to the external environmental conditions (e.g. sun or rain), and be more homogeneous, resulting in reduced internal stresses during the lifetime of the product.

It is an advantage of embodiments of the present invention that the depth and/or width of the recesses may vary over the insulation panel, while still providing sufficient contact area and leaving sufficient opening. This degree of freedom can be used for other purposes, e.g. for avoiding a step in the ceiling.

The recesses have a depth and the pre-shrunk corrugated fiber cement sheet have a height (Hf), and the ratio of the depth and the height may be in the range of 15% to 75%.

By choosing a larger ratio, the contact area between the insulation material and the fiber sheet increases. The larger this contact area, the more adhesive can be applied, and the lower the pressure forces exerted upon the insulation material, which has to carry the weight of the fiber cement sheet. On the other hand, the ratio should not be too large, because it decreases the effective thickness of the insulation panel, and/or reduces the size of the openings. Very favorable results are expected in the range of 15% to 75%, preferably in the range of 25% to 50%.

The recesses may be provided with a substantially constant depth and a substantially constant width, and the maximum thickness of the thermal insulation panel may vary from a first thickness and a second thickness in a length direction of the recesses, the second thickness being substantially equal to the sum of the first thickness and the thickness of the pre-shrunk corrugated fiber cement sheet.

In embodiments of the present invention, the size and shape of the back-surface, and the size and shape of the recesses can be chosen such that an arrangement of overlapping panels provide a ceiling without a step, and/or with a substantially flat surface at the inner side.

The maximum thickness of the thermal insulation panel may be substantially constant in the length direction of the recesses, and the depth of the recesses may vary from a first depth to a second depth in the length direction of the recesses, the second depth being substantially equal to the sum of the first depth and the thickness of the pre-shrunk corrugated fiber cement sheet. In this example, the back-side of the insulation panel is left unadjusted, but the recesses are provided in a non-uniform way for achieving a flush ceiling, when two (or more) corrugated fiber cement sheets are arranged in an overlapping way.

The method further may comprise the step of applying a vapor-tight and/or water-tight layer to the thermal insulation panel on the side having the recesses. It is an advantage of applying a vapor-tight and/or water-tight layer on the upper side of the insulation panel, in that it prevents the insulation material to absorb moisture. Instead, the moisture, even if condensed, can flow (or stream) in the openings towards the open air, and is not trapped. Such a vapor-tight and/or water-tight layer may be applied before or after milling. Advantageously, the vapor-tight and/or water-tight layer is applied to the panel prior to milling the recesses.

The method may comprise applying a vapor-tight and/or water-tight layer to the thermal insulation panel on the substantially planar side of the thermal insulation panel. It is an advantage of applying a vapor-tight and/or water-tight layer, e.g. an aluminum layer such as aluminum film or foil, a plastic film, plastic plate, plastic material or plastic foil (e.g. polyvinylchloride); cementitious material, fiber cement or other material, on the lower side of the insulation panel, in that it allows easier or better cleaning of the inside of the facility underneath the roof, such as a stable for animals. When a water-tight layer is applied, water can be sprayed against the ceiling, without damaging to the insulated corrugated fiber cement panels. Openings between different panels may be covered. This application can be done prior to or after the adhesion of the fiber cement sheet to the thermally insulation panel.

Where required, additional sealing means, such as for example sealing bands, also can be applied.

A dimension of the fiber cement sheet may be larger than a dimension of the thermal insulation panel for allowing an overlapping arrangement of two or more insulated corrugated fiber cement sheets in the length direction. By providing a zone (in the length and/or width direction) not having insulation material, the fiber cement panels can still be overlapped, in a way similar to the prior art, which effectively avoids gaps in the roof, and provides for easy drainage of rain. The insulation panels of the adjacent fiber cement sheets, by their flush arrangement, may act and look as if they are segments of one big insulation panel.

The adhesive may be applied on at least 20% of the surface area of the recesses, preferably on at least 40%. The shape of the recesses, e.g. conical, triangular or sinusoidal or any other shape engaging with protrusions of the fiber cement sheet, may increase mechanical stability for holding the fiber cement sheet in place. Under normal circumstances (e.g. when used as roofing) no shear forces are exerted between the insulation panel and the fiber cement sheet. Therefore the main purpose of the adhesive is to maintain the mechanical bond between the fiber cement sheet and the insulation panel. The adhesive layer should be able to withstand some degree of stress/strain due to shrinking and expansion under varying weather conditions (e.g. hot and dry in summer, and cold and wet in winter) and due to aging of the fiber cement sheet.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

FIG. 1 shows an embodiment of a method for producing an insulated corrugated fiber cement sheet, according to aspects of the present invention.
FIG. 2 shows how an insulated sheet having recesses engages with undulations of the fiber cement sheet, and is adhered thereto, according to the present invention.
FIG. 3 shows a perspective view of an embodiment of an insulated corrugated fiber cement sheet using the principles of FIG. 2.
FIG. 4 shows a cross section of the insulated corrugated fiber cement sheet of FIG. 3 in the plane B-B.
FIG. 5 shows a cross section of the insulated corrugated fiber cement sheet of FIG. 3 in the plane A-A.
FIG. 6 shows a top view of the thermal insulation panel as can be used in the insulated corrugated fiber cement sheet of FIG. 3.
FIG. 7 shows the thermal insulation panel of FIG. 6 in perspective view.
FIG. 8 shows a variant of the thermal insulation panel of FIG. 6, as can be used in a second embodiment of an insulated corrugated fiber cement sheet of the present invention.
FIG. 9 shows an arrangement of two overlapping insulated corrugated fiber cement sheets according to the present invention.
FIG. 10 (A) to (E) illustrates different ways of contacting insulating plates with each other when providing a construction using products according to embodiments of the present invention.
FIG. 11 illustrates the fixing and overlap in vertical direction of the construction of two elements according to embodiments of the present invention.

The drawings are only schematic and are non-limiting. In the drawings, the size of some of the elements may be exaggerated and not drawn on scale for illustrative purposes.

Any reference signs in the claims shall not be construed as limiting the scope.
In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

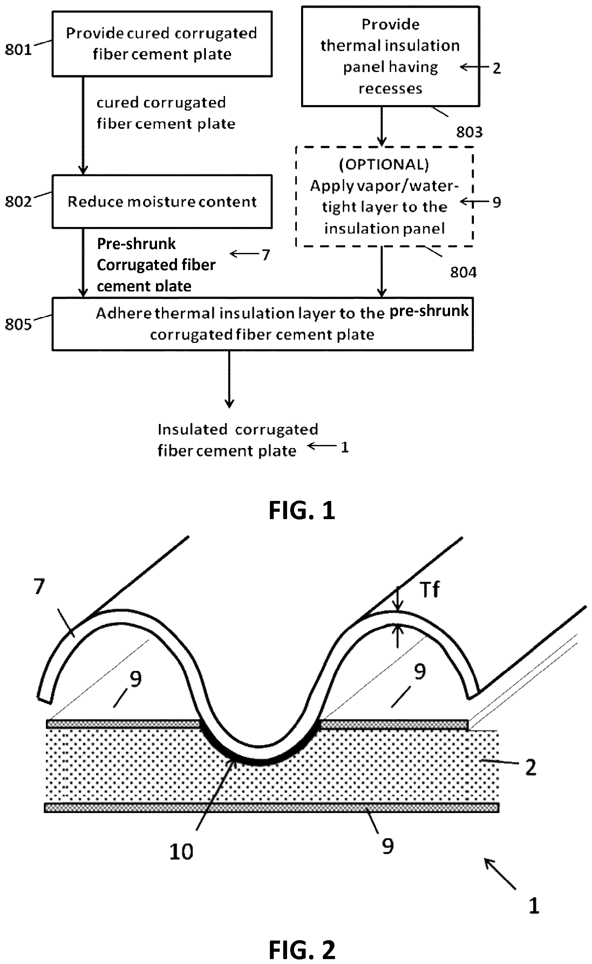

When referring to a "vapour/water-tight layer", reference is made to a layer that is substantially vapour-tight and/or water-tight. The present invention relates to a method of producing an insulated corrugated fiber cement sheet, comprising the steps of providing a cured corrugated fiber cement sheet, shrinking the cured corrugated fiber cement sheet, e.g. by reducing the moisture content of the cured corrugated fiber cement sheet to an amount equal or less than 12%w, thereby providing a pre-shrunk corrugated fiber cement sheet, and adhering a thermal insulation panel comprising a plurality of elongated recesses to one side of the pre-shrunk corrugated fiber cement sheet having undulations thereby providing said insulated corrugated fiber cement sheet, the recesses having a shape for partly engaging with the undulations of the pre-shrunk corrugated fiber cement sheet while leaving openings between the thermal insulation panel and the pre-shrunk corrugated fiber cement sheet for allowing air flow on both sides of the fiber cement sheet. The drying can be done by subjecting the corrugated fiber cement sheet to a heating in a drying oven with air circulation, typically having spacers between the stacked corrugated fiber cement sheets, thereby reducing the amount of moisture to become equal or less than 12%w.
According to embodiments of the present invention, the additional step of drying (i.e. reducing the moisture content of the cured fiber cement sheet) is explicit part of the process, and only after the fiber cement sheet had sufficiently shrunk, e.g. sufficiently dried, the insulation panel was adhered thereto. It was found that the failure rate of insulated fiber cement panels thus produced had dropped significantly as compared to panels produced without the additional step of pre-shrinking, such as drying.
A possible explanation is that a fiber cement sheet which is cured will shrink significantly, to a large extent all being irreverable shrinkage. E.g. the cured fiber cement sheet still contains a considerable amount of moisture, which will only gradually come into equilibrium with the environment afterwards (e.g. during actual use). When adhesion is applied to such an "unshrunk" fiber cement sheet, e.g. a "relatively wet" fiber cement sheet, then the risk is very high that either the fiber cement sheet, the adhesion, or the insulation will break due to residual stress. It is believed that the residual stress is drastically reduced by first taking away a large part of the irreversible shrinkage, e.g. by drying the fiber cement sheet before applying the adhesion. The drying step causes to "neutralize" a major part of the shrinkage of the fiber cement sheet, causing the shrinkage and expansion of the fiber cement sheet to match better the shrinkage and expansion of the thermally insulation panel once both elements are connected one to the other by an adhesive. The method will be explained in relation to FIG. 1, illustrating an exemplary method according to an embodiment of the present invention. Besides this additional step of drying, also mechanical improvements were applied, as will be described further, in relation to FIG. 2 to FIG. 9, which further help to reduce the mechanical stress.

FIG. 1 shows a flowchart of an embodiment of a method for producing an insulated corrugated fiber cement sheet 1 according to the present invention.

In a first step 801 a "cured corrugated fiber cement sheet" is provided. Methods for making corrugated fiber cement sheets are known in the art, and therefore is not described in full detail here. One technique of forming or producing fiber cement elements is known as the Hatschek process. It starts from a fiber cement slurry typically comprising water; process and/or reinforcing fibers which may be organic fibers (such as e.g. cellulose fibers) and/or synthetic fibers (such as e.g. polyvinylalcohol, polyacrilonitrile, polypropylene, polyamide, polyester, polycarbonate); cement (e.g. Portland cement); and additives (such as e.g. limestone, chalk-, quick lime, slaked or hydrated lime, ground sand, silica sand flour, quartz flour, amorphous silica, condensed silica fume, microsilica , metakaolin, wollastonite, mica, perlite, vermiculite, aluminum hydroxide, pigments, anti-foaming agents, flocculants, or other additives). The fiber cement slurry is transformed into a flat sheet. Then the sheets are cut in length, corrugations are provided, and the corrugated sheets are cured, typically air cured. The sheet may comprise a single layer, a double layer, or, more typically, a multi-layer of fiber cement slurry. Instead of the Hatschek process, also the Magnani-process may be used. Air curing means that the corrugated sheets are set aside and allowed to cure while they are in contact with the ambient. In an alternative air curing process, the corrugated sheets are stored in a curing tunnel, where the exothermal energy of the cement curing is used to increase the temperature in the tunnel, typically to 30 to 60 °C, while moisture form the corrugated sheets will increase the humidity in the tunnel to more than 90% relative humidity. This high humidity caused the sheets not to dry significantly.
The result of step 801 is "a cured corrugated fiber cement sheet".
In step 802, the "cured corrugated fiber cement sheet" is e.g. dried in an oven, at a temperate in the range of 35 to 65 °C for a duration in the range of 24 to 36 hours, e.g. at a temperature of about 45 °C during about 24 hours. The purpose of this step is to reduce (or further reduce) the moisture content of the cured fiber cement sheet to a level of 12%w, thereby shrinking the cured fiber cement sheet to a level or residual shrinkage of less than 4mm/m. The result of this step is a so called "pre-shrunk or dried corrugated fiber cement sheet". Optionally, the corrugated sheets may be pressed or subjected to other or additional treatments to strengthen the corrugated sheets and/or to take out part of the shrinkage.

In step 803, a thermal insulation panel 2 is provided. The thermal insulation panel 2 is preferably made of an insulation material chosen from any stiff insulation material, the group consisting of polyurethane (PUR), poly-isocyanurate (PIR), extruded polystyrene (XPS), expanded polystyrene (EPS), or other suitable materials.
Though not limitative, the thickness of the thermal insulation panel 2 may be typically between (values included) 40 and 200 mm, e.g. between 40mm and 180mm, such as between 40 mm and 120mm, e.g. 40mm, 60mm, 80mm, 120mm, 140mm, 160mm, 180mm, or any other value in between.

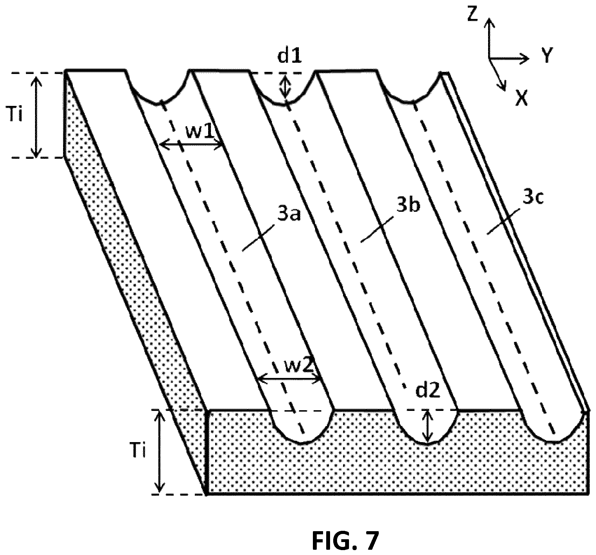

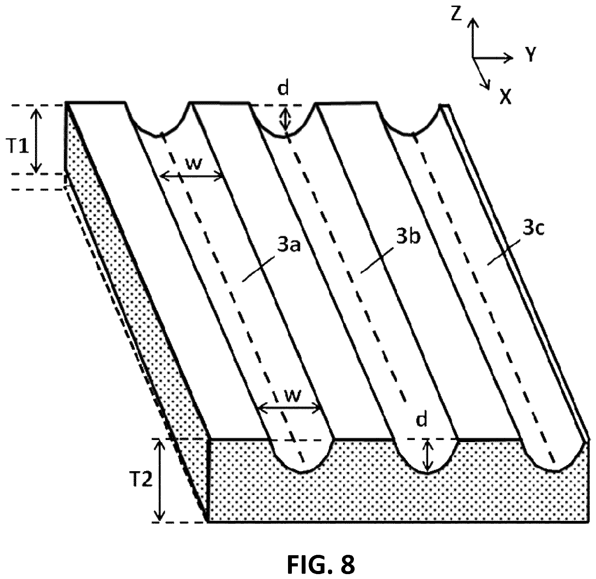

The thermal insulation panel 2 has a plurality of elongated recesses 3 having a shape (see for example FIG. 7 or FIG. 8) for engaging with part of the undulations 4 of the pre-shrunk corrugated fiber cement sheet, while leaving openings 5 between the thermal insulation panel 2 and the pre-shrunk corrugated fiber cement sheet (as shown in FIG. 2).

Optionally, a vapor/water-tight layer 9 (e.g. a vapor-tight sheet or film, or a water-tight film or sheet) is applied to the thermal insulation panel 2. The vapor/water-tight layer 9 may be applied on the upper side of the insulation panel 2 (i.e. the side that will face the undulations 4 of the dried fiber cement sheet 7), or may be applied to the bottom side of the insulation panel 2 (i.e. the substantially flat side), or to both. The vapor/water-tight layer 9 on the upper side of the insulation panel may e.g. comprise an aluminum film or aluminum foil, plastic film, plastic plate, plastic material or plastic foil. On the opposite, flat outside of the panel, vapor/water-tight layer 9 can be e.g. aluminum film or foil; plastic film, plastic plate, plastic material or plastic foil (e.g. polyvinylchloride); cementitious material, fiber cement or other material. The vapor/water-tight layer 9 may be glued to the insulation sheet. Such a vapor-tight or water-tight layer may be applied before or after milling of the recesses. In advantageous embodiments, such a layer may be applied before the milling. In some embodiments, part of the vapor/water-tight layer 9 may be applied as strips between the recesses 3 (see FIG. 2).

The recesses 3, e.g. rounded, conical, trapezoidal or triangular recesses, although other shapes may also be used, increase the area of the contacting surfaces of the insulation material and the dried corrugated fiber cement sheet 7. Yet, it may not be absolutely necessary to cover all of this contact area with adhesive. For example, it may be sufficient to cover only a part of the surface area of the recesses 3. The adhesive may be applied as lines or "beads" of adhesive, or as blobs or dots of adhesive.
The adhesive may be applied in line with the typical used and methods applicable for the type of adhesive used, e.g. as a liquid or in molten state, by brushing, spraying, pouring, etc. The adhesive improves the mechanical adhesion between the insulation panel 2 and the pre-shrunk corrugated fiber cement sheet 7, and avoids that forces are exerted on the vapor/water-tight layer 9, and thus reduces the risk of loosening of the vapor/water-tight layer 9. Indeed, its primary function is to avoid moisture to penetrate into the insulation material 2, thereby prohibiting undesirable expansion of the insulation material.
After applying an adhesive and contacting the pre-shrunk corrugated fiber cement sheet 7 and the thermal insulating panel 2, a slight pressure may be applied during part of the curing time of the adhesive, to improve the adhesion.

In step 805 an adhesive layer 10 is applied to either the undulations 4 of the pre-shrunk corrugated fiber cement sheet 7, or to the recesses 3 of the thermal insulation panel 2, or to both, and the thermal insulation panel 2 is brought in engaging contact with the pre-shrunk corrugated fiber cement sheet 7.

Basically any suitable adhesive adhering to the insulating material and fiber cement material may be used. The adhesive is preferably chosen as function of the insulation material, and/or as function of its distance dfp between two fixation points for fixing the sheets to the roof construction, typically the points where the sheet is fixed to underlying purlins, in the direction perpendicular to the corrugation, usually the direction of the rafters. For "long" distance between two such fixation points, i.e. sheets with a distance between two fixation points of more than 1.9m preferably a polyurethane glue is used. For "normal" distance between two fixation points of less than or equal to 1.9m preferably a polyolefin based glue may be used.

The result of step 805 is an insulated corrugated fiber cement sheet 1 according to aspects of the present invention.

FIG. 2 shows some of the basic principles used in the present invention. It shows an example of a pre-insulated fiber cement sheet 1 according to aspects of the present invention. It comprises two major components: a corrugated fiber cement sheet 7, and a thermal insulation panel 2, which is adhered thereto by means of an adhesive layer 10 (indicated in black color). The thermal insulation panel 2 preferably has a specific shape and dimensions, which will be discussed in more detail further, in relation to FIG. 2 to FIG. 9. Of course, during actual use of the insulated corrugated fiber cement sheet 1, the moisture content of the fiber cement sheet itself may fluctuate under different environmental conditions or depending on the storage conditions for the sheets, but tests have shown that this is not a problem, as long as the moisture content of the fiber cement sheet at the moment when the insulation panel 2 was adhered thereto by means of adhesive layer 10, was "sufficiently low" (see above).

In what follows, some mechanical consideration will be described, which may further decrease the risk of cracks and/or slits between the insulation panel 2 and the fiber cement sheet 7 during the lifetime of the insulated corrugated fiber cement sheet 1. These mechanical provisions may also provide other benefits, such as (i) simplification of the production process of the insulated corrugated fiber cement sheet, e.g. by easy alignment of the pre-shrunk corrugated fiber cement sheet 7 on top of the insulation material, or vice versa, (ii) facilitating easy placement of the insulated corrugated fiber cement sheets 1 on a roof, in an overlapping arrangement, (iii) providing a flat ceiling (at the underside of such roof) which is flush, and hence can be more easily cleaned.

In what follows, it is assumed that the insulated corrugated fiber cement sheet 1 is always manufactured using the process described above and as illustrated in FIG. 1. Therefore, the terms "cured and/or dried and/or pre-shrunk " will no longer be mentioned, and the simple expression " fiber cement sheet" will be used instead.

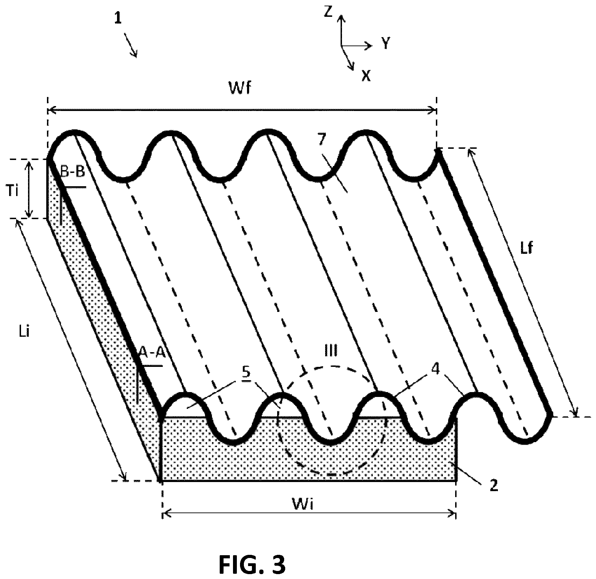

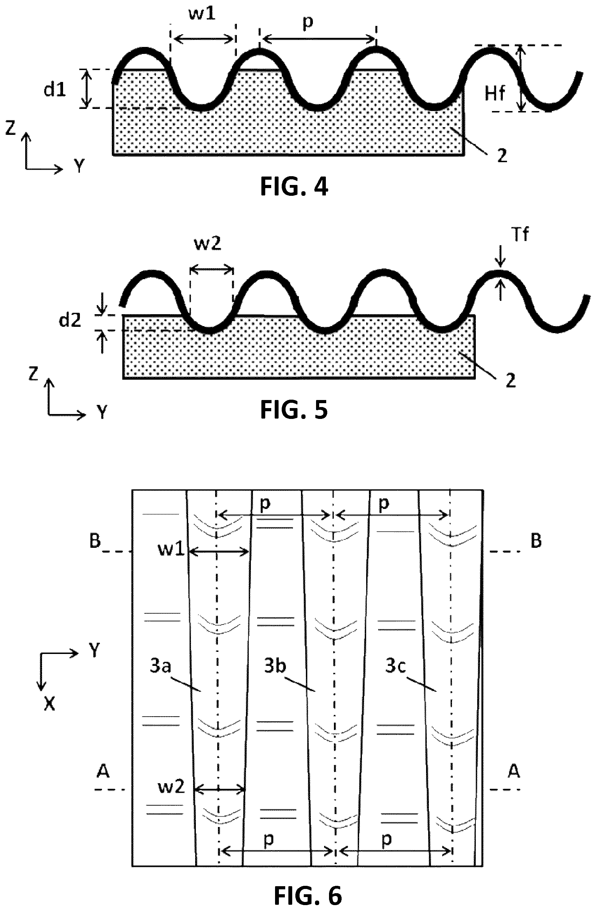

FIG. 3 shows a perspective view of an embodiment of an insulated corrugated fiber cement sheet 1 according to aspects of the present invention. The drawing shows, in combination with FIG. 4 to FIG. 8, the shape and/or dimensions of the insulation panel 2, in particular of the recesses 3 (also called "grooves") that may be used. No reference is made further to the adhesive layer 10 or the optional one or more vapor-tight and/or water-tight layers 9, which were described above, with reference to FIG. 2. It is noted that FIG. 2 is in fact a more detailed view of the encircled portion III of FIG. 3.

FIG. 4 shows a thermal insulation panel 2, having a length Li and width Wi and thickness Ti, on top of which a fiber cement sheet 7 is arranged. The fiber cement sheet 7 has a length Lf (e.g. about 2.4 m), and a width Wf (e.g. about 1.0 m), and a height Hf (e.g. about 10 cm)(see FIG. 5), and a thickness Tf (e.g. about 1.0 cm). The undulations 4 have a pitch "p" (FIG. 5), e.g. of about 20 cm. Although specific numbers are mentioned by way of example, other dimensions can also be used. In the embodiment shown, the fiber cement sheet 7 has exactly four full undulation periods, but the invention is not limited thereto, and may have any fractional number of undulations. In the example shown, the undulations 4 are substantially sinusoidal, but the invention is not limited thereto, and other waveforms, such as e.g. triangular or saw tooth may also be used.

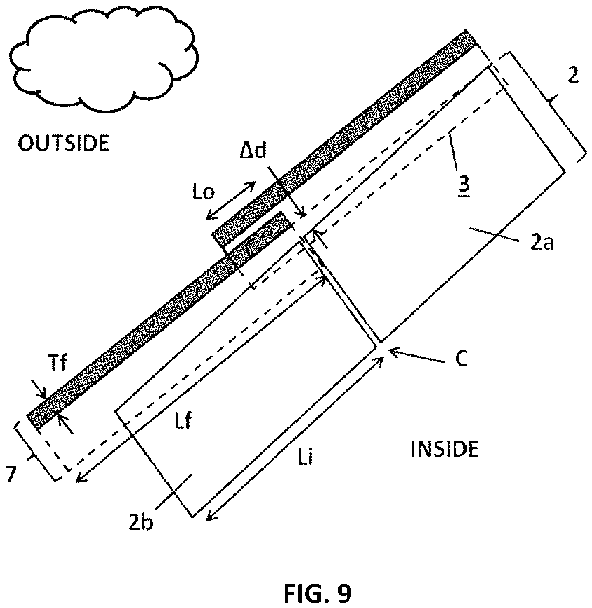

In FIG. 4, the length Li of the insulation panel 2 is chosen identical to the length Lf of the fiber cement sheet 7 for illustrative purposes, but in other embodiments (see e.g. FIG. 9), the length Lf of the fiber cement sheet 7 is preferably larger than the length Li of the insulation panel 2, as will be described further. In the embodiment of FIG. 3, the width Wf of the fiber cement sheet 7 is larger than the width Wi of the insulation panel 2, but in other embodiments (not shown) it may also be chosen to be the same.

The insulation panel 2 has a plurality of elongated recesses 3 corresponding to the shape and size of the undulations 4 of the fiber cement sheet 7, as is better illustrated in FIG. 7 and FIG. 8. The pitch "p" of these recesses 3 is identical to the pitch "p" of the undulations 4 of the fiber cement sheet 7, however, the depth "d, d1, d2" of the recesses 3 is deliberately chosen substantially smaller than the height Hf of the fiber cement sheet 7, for leaving an opening 5 (e.g. air gap) between the insulation material 2 and the fiber cement sheet 7, for allowing air flow on both sides of the fiber cement sheet, for allowing the moisture content in the fiber cement sheet to be better in equilibrium with the moisture content of "the environment". In this way, the moisture content at the upper side and lower side of the fiber cement sheet 7 will be more homogeneous, although both may vary depending on the external weather conditions (e.g. both dry and warm in summer, both less dry and cold in winter). In this way internal stresses within the fiber cement sheet are reduced or avoided.

FIG. 4 shows a cross section of the insulated corrugated fiber cement sheet 7 of FIG. 3 in the plane B-B, and FIG. 5 shows a cross section of the insulated corrugated fiber cement sheet 7 of FIG. 3 in the plane A-A. Comparison of FIG. 4 and FIG. 5 shows that the depth "d1" of the recesses 3 of the insulation panel 2 is larger in the plane B-B than the depth "d2" of the recesses 3 in the plane A-A. Correspondingly, the width w1 of the recesses 3 in the plane B-B is larger than the width w2 of the recesses 3 in the plane A-A. Such recesses 3 or grooves can be made in any known way, e.g. by milling.

FIG. 6 shows a top view, and FIG. 7 a perspective view of the thermal insulation panel 2 used in the insulated corrugated fiber cement sheet 1 of FIG. 3. By choosing a depth that varies (linearly) from the value "d1" in plane B-B to the value "d2" in the plane A-A, an imaginary tangent plane located on top of the corrugated fiber cement sheet 7 of FIG. 3, will not be parallel with an imaginary tangent plane located at the bottom of the insulation panel 2, but will be slightly declined thereto. By choosing the difference in depth Δd = d2-d1 substantially equal to the thickness Tf (FIG. 5) of the fiber cement sheet 7, the effect is obtained that the "planar" sides of the thermal insulation panels 2 of adjacent insulated corrugated fiber cement sheets 1, are substantially flush (as can be seen at the location "C" in FIG. 9) despite the overlapping arrangement of the corrugated fiber cement sheets 7 themselves. If the depth "d" were constant in all recesses 3 of the insulation panel 2, there would be a step in the ceiling equal to the size of the thickness Tf of the fiber cement sheets. The places where the insulation panels meet are hardly visible, if visible at all.

FIG. 8 shows a variant of the thermal insulation panel of FIG. 4 to FIG. 6, as can be used in a second embodiment of an insulated corrugated fiber cement sheet 1 of the present invention. In this example, the depth "d" and width "w" of the recesses 3 is constant, but the opposite side (the flat side) of the insulation panel 2 is made (e.g. cut) such that the same effect as shown in FIG. 9 is obtained. This can e.g. be achieved by removing material in the height direction Z of the insulation panel 2, linearly varying from nearly no material removal in the plane A-A, to an amount ΔT = T2-T1 substantially equal to the thickness Tf of the corrugated fiber cement sheet 7, in the plane B-B.

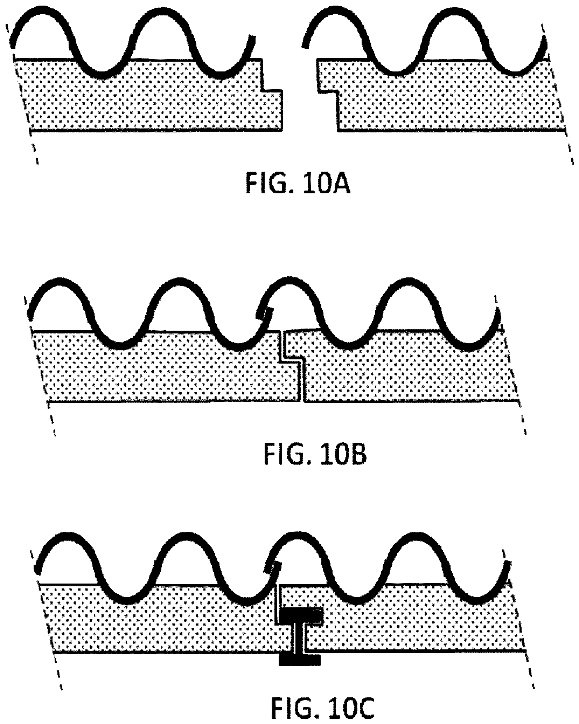

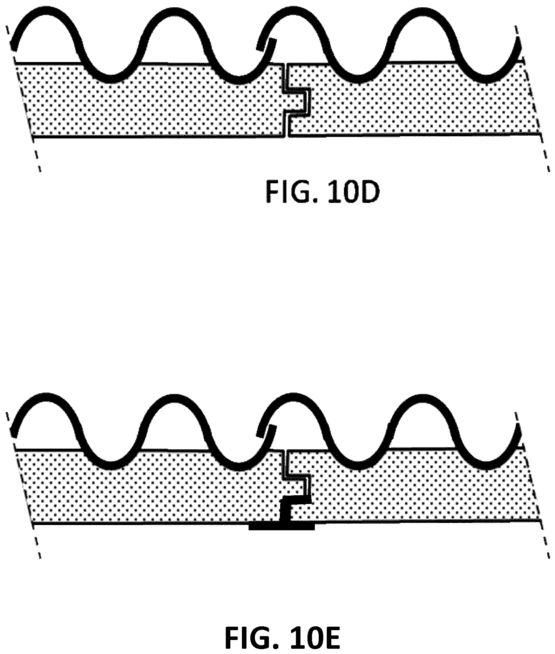

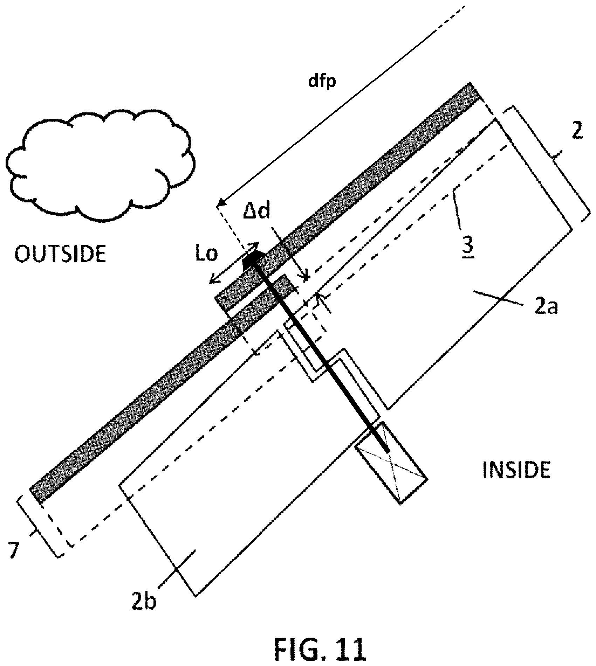

FIG. 9 shows an arrangement of two overlapping insulated corrugated fiber cement sheets 1 according to embodiments of the present invention. As can be seen, the length Li of the insulation panel 2 is smaller than the length Lf of the fiber cement sheet 7 by an amount equal to the overlapping distance Lo. A typical overlapping distance Lo is e.g. about 20 cm. It is noted that although the insulation panels 2a, 2b are drawn at a distance from each other for illustrative purposes, in practice they would contact each other.
The insulation panels 2a, 2b also may be provided with co-operating features such as complementary shaped end portions that can be put in close contact with each other, such as a tongue-groove connection, protruding portions and corresponding recesses at positions where insulation panels need to be contacted, etc. In some advantageous embodiments, an additional element, such as e.g. a particular profile, may be used for hiding or covering the seam between the two insulation panels. By way of illustration examples of such embodiments are shown with reference to FIG. 10, illustrating schematically in FIG. 10 (A) two different elements being separated from each other, whereas in FIG. 10 (B) the situation is schematically shown where the two components are in position. FIG. 10 (C) illustrates the same construction as in FIG. 10 (B) but with an additional profile for covering the seam. FIG. 10 (D) and FIG. 10 (E) schematically illustrate alternatives with a tongue-groove connection and with a tongue-groove connection wherein the seam is hidden by an additional profile. The place where two plates overlap in vertical direction (e.g. towards the top of the roof), is preferably located above a purlin. Using a connection means, such as e.g. nails or screws, and corresponding opening in the fiber sheets, the sheets thus can be fixed to the roof frame. The latter is illustrated by way of example in FIG. 11. The distance between two fixation points is indicated as distance dfp.

### REFERENCES:

- 1: insulated corrugated fiber cement sheet
- 2: thermal insulation panel
- 3: elongated recess
- 4: undulation (of fiber cement sheet)
- 5: opening
- 7: corrugated fiber cement sheet
- 9: vapor-tight or water-tight layer
- 10: adhesive layer
- d: depth of elongated recess
- Δd: difference in recess depth
- T: thickness of thermal insulation panel
- w: width of elongated recess
- Hf: height of fiber cement sheet
- Tf: thickness of the fiber cement sheet
- p: pitch
- Wf: width of the fiber cement sheet
- Lo: overlapping distance
- Lf: length of the fiber cement sheet
- Wi: width of the thermal insulation panel
- Li: length of the thermal insulation panel
- 101: fiber cement sheet
- dfp: distance between fixation points

## Claims

1. Method of producing an insulated corrugated fiber cement sheet (1), comprising the steps of:
a) providing a cured corrugated fiber cement sheet;
b) shrinking of the cured corrugated fiber cement sheet, thereby providing a pre-shrunk corrugated fiber cement sheet (7) having a residual shrinkage in the direction of the corrugation is less than 4 mm/m measured by the method described in the description.
c) adhering a thermal insulation panel (2) comprising a plurality of elongated recesses (3) to one side of the pre-shrunk corrugated fiber cement sheet (7) having undulations thereby providing said insulated corrugated fiber cement sheet (1), the recesses having a shape for partly engaging with the undulations (4) of the pre-shrunk corrugated fiber cement sheet (7) while leaving openings (5) between the thermal insulation panel (2) and the pre-shrunk corrugated fiber cement sheet (7) for allowing air flow on both sides of the fiber cement sheet.

2. The method according to claim 1, wherein shrinking the cured corrugated fiber cement sheet comprises reducing the moisture content of the cured corrugated fiber cement sheet to an amount less than 12%w, measured by the method described in the description, thereby providing the pre-shrunk corrugated fiber cement sheet (7).

3. The method according to claim 2, wherein the step of lowering the moisture content is performed by placing the cured corrugated fiber cement sheet in an oven a having a temperature in the range of 35 to 65 °C, for a period of at least 24 hours.

4. The method according to any of the previous claims, wherein the recesses (3) have a depth (d, d1, d2) and the pre-shrunk corrugated fiber cement sheet (7) has a height (Hf), and whereby the ratio of the depth (d, d1, d2) and the height (Hf) is in the range of 15% to 75%.

5. The method according to claim 4, wherein the recesses (3) are provided with a substantially constant depth (d) and a substantially constant width (w), and whereby the maximum thickness of the thermal insulation panel (2) varies from a first thickness (T1) and a second thickness (T2) in a length direction (X) of the recesses (3), the second thickness (T2) being substantially equal to the sum of the first thickness (T1) and the thickness (Tf) of the pre-shrunk corrugated fiber cement sheet (7).

6. The method according to claim 4, wherein the maximum thickness (Ti) of the thermal insulation panel (2) is substantially constant in the length direction (X) of the recesses (3), and wherein the depth of the recesses (3) varies from a first depth (d1) to a second depth (d2) in the length direction (X) of the recesses (3), the second depth (d2) being substantially equal to the sum of the first depth (d1) and the thickness (Tf) of the pre-shrunk corrugated fiber cement sheet (7).

7. The method according to any of the previous claims, further comprising the step of applying a vapor-tight and/or water-tight layer to the thermal insulation panel (2) on the side having the recesses (3).

8. The method according to any of the previous claims, further comprising the step of applying a vapor-tight and/or water-tight layer to the thermal insulation panel (2) on the substantially planar side of the thermal insulation panel (2).

9. The method according to any of the previous claims, wherein a dimension of the fiber cement sheet (7) is larger than a dimension of the thermal insulation panel (2) for allowing an overlapping arrangement of two or more insulated corrugated fiber cement sheets (1) in the length direction.

## Patentansprüche

1. Verfahren zur Herstellung einer isolierten, gewellten Faserzementplatte (1), umfassend die Schritte:
a) Bereitstellen einer ausgehärteten, gewellten Faserzementplatte;
b) Schrumpfen der ausgehärteten, gewellten Faserzementplatte, dadurch Bereitstellen einer vorgeschrumpften, gewellten Faserzementplatte (7), die eine Restschrumpfung in Richtung der Wellung aufweist, die, gemäß dem in der Beschreibung beschriebenen Verfahren gemessen, kleiner als 4 mm/m ist;
c) Ankleben einer Wärmeisolierplatte (2), die mehrere längliche Aussparungen (3) zu einer Seite der vorgeschrumpften, gewellten Faserzementplatte (7) umfasst, die Wellenformen aufweist, dadurch Bereitstellen der isolierten, gewellten Faserzementplatte (1), wobei die Aussparungen eine Form aufweisen, um teilweise in die Wellenformen (4) der vorgeschrumpften, gewellten Faserzementplatte (7) einzugreifen und gleichzeitig Öffnungen (5) zwischen der Wärmeisolierplatte (2) und der vorgeschrumpften, gewellten Zementfaserplatte (7) zu belassen, um einen Luftstrom auf beiden Seiten der Faserzementplatte zu ermöglichen.

2. Verfahren nach Anspruch 1, wobei das Schrumpfen der ausgehärteten, gewellten Zementfaserplatte das Reduzieren des Feuchtigkeitsgehalts der ausgehärteten gewellten Faserzementplatte zu einer Menge, die gemäß dem in der Beschreibung beschriebenen Verfahren gemessen wurde, von kleiner als 12 Gew.-% umfasst, dadurch Bereitstellen der vorgeschrumpften, gewellten Faserzementplatte (7).

3. Verfahren nach Anspruch 2, wobei der Schritt der Verringerung des Feuchtigkeitsgehalts durch Platzieren der ausgehärteten, gewellten Faserzementplatte in einem Ofen erfolgt, der eine Temperatur in dem Bereich von 35 bis 65°C für einen Zeitraum von mindestens 24 Stunden aufweist.

4. Verfahren nach einem der vorhergehenden Ansprüche, wobei die Aussparungen (3) eine Tiefe (d, d1, d2) aufweisen und die vorgeschrumpfte, gewellte Faserzementplatte (7) eine Höhe (Hf) aufweist, wodurch das Verhältnis zwischen der Tiefe (d, d1, d2) und der Höhe (Hf) in dem Bereich von 15% bis 75% liegt.

5. Verfahren nach Anspruch 4, wobei die Aussparungen (3) mit einer im Wesentlichen konstanten Tiefe (d) und einer im Wesentlichen konstanten Breite (w) bereitgestellt sind, und wodurch die maximale Dicke der Wärmeisolierplatte (2) von einer ersten Dicke (T1) und einer zweiten Dicke (T2) in einer Längenrichtung (X) der Aussparungen (3) variiert, wobei die zweite Dicke (T2) im Wesentlichen der Summe der ersten Dicke (T1) und der Dicke (Tf) der vorgeschrumpften, gewellten Faserzementplatte (7) entspricht.

6. Verfahren nach Anspruch 4, wobei die maximale Dicke (Ti) der Wärmeisolierplatte (2) in einer Längenrichtung (X) der Aussparungen (3) im Wesentlichen konstant ist, und wobei die Tiefe der Aussparungen (3) von einer ersten Tiefe (d1) zu einer zweiten Tiefe (d2) in Längenrichtung (X) der Aussparungen (3) variiert, wobei die zweite Tiefe (d2) im Wesentlichen der Summe der ersten Tiefe (d1) und der Dicke (Tf) der vorgeschrumpften, gewellten Faserzementplatte (7) entspricht.

7. Verfahren nach einem der vorhergehenden Ansprüche, ferner umfassend den Schritt des Aufbringens einer dampfdichten und/oder wasserdichten Schicht auf die Wärmeisolierplatte (2) auf der Seite, welche die Aussparungen (3) aufweist.

8. Verfahren nach einem der vorhergehenden Ansprüche, ferner umfassend den Schritt des Aufbringens einer dampfdichten und/oder wasserdichten Schicht auf die Wärmeisolierplatte (2) auf der im Wesentlichen flachen Seite der Wärmeisolierplatte (2).

9. Verfahren nach einem der vorhergehenden Ansprüche, wobei eine Abmessung der Faserzementplatte (7) größer als eine Abmessung der Wärmeisolierplatte (2) ist, um eine sich überschneidende Anordnung von zwei oder mehreren isolierten, gewellten Faserzementplatten (1) in Längenrichtung zu ermöglichen.

## Revendications

1. Procédé de fabrication d'une feuille de fibrociment ondulée isolée (1), comprenant les étapes qui consistent à :
a) fournir une feuille de fibrociment ondulée durcie ;
b) faire rétracter la feuille de fibrociment ondulée durcie, en produisant de ce fait une feuille de fibrociment ondulée prérétractée (7) ayant un retrait résiduel dans la direction de l'ondulation qui est inférieur à 4 mm/m, mesuré par la méthode décrite dans la description,
c) faire adhérer un panneau d'isolation thermique (2) comprenant une pluralité de renfoncements allongés (3) à un côté de la feuille de fibrociment ondulée prérétractée (7) comportant des ondulations, en produisant de ce fait ladite feuille de fibrociment ondulée isolée (1), les renfoncements ayant une forme permettant une mise en contact partielle avec les ondulations (4) de la feuille de fibrociment ondulée prérétractée (7) tout en laissant des ouvertures (5) entre le panneau d'isolation thermique (2) et la feuille de fibrociment ondulée prérétractée (7) pour permettre à l'air de circuler sur les deux côtés de la feuille de fibrociment.

2. Procédé selon la revendication 1, dans lequel le retrait de la feuille de fibrociment ondulée durcie comprend une réduction de la teneur en humidité de la feuille de fibrociment ondulée durcie jusqu'à une quantité inférieure à 12 % en poids, mesurée par la méthode décrite dans la description, en produisant de ce fait la feuille de fibrociment ondulée prérétractée (7).

3. Procédé selon la revendication 2, dans lequel l'étape de réduction de la teneur en humidité est exécutée en plaçant la feuille de fibrociment ondulée durcie dans un four ayant une température de 35 à 65 °C, pendant une période d'au moins 24 heures.

4. Procédé selon l'une quelconque des revendications précédentes, dans lequel les renfoncements (3) ont une profondeur (d, d1, d2) et la feuille de fibrociment ondulée prérétractée (7) a une hauteur (Hf), et le rapport de la profondeur (d, d1, d2) et de la hauteur (Hf) étant ainsi de 15 % à 75 %.

5. Procédé selon la revendication 4, dans lequel les renfoncements (3) présentent une profondeur sensiblement constante (d) et une largeur sensiblement constante (w), et dans lequel l'épaisseur maximum du panneau d'isolation thermique (2) varie d'une première épaisseur (T1) à une deuxième épaisseur (T2) dans une direction longitudinale (X) des renfoncements (3), la deuxième épaisseur (T2) étant sensiblement égale à la somme de la première épaisseur (T1) et de l'épaisseur (Tf) de la feuille de fibrociment ondulée prérétractée (7).

6. Procédé selon la revendication 4, dans lequel l'épaisseur maximum (Ti) du panneau d'isolation thermique (2) est sensiblement constante dans la direction longitudinale (X) des renfoncements (3), et dans lequel la profondeur des renfoncements (3) varie d'une première profondeur (d1) à une deuxième profondeur (d2) dans la direction longitudinale (X) des renfoncements (3), la deuxième profondeur (d2) étant sensiblement égale à la somme de la première profondeur (d1) et de l'épaisseur (Tf) de la feuille de fibrociment ondulée prérétractée (7).

7. Procédé selon l'une quelconque des revendications précédentes, comprenant en outre l'étape qui consiste à appliquer une couche étanche à la vapeur et/ou étanche à l'eau sur le panneau d'isolation thermique (2) sur le côté comportant les renfoncements (3).

8. Procédé selon l'une quelconque des revendications précédentes, comprenant en outre l'étape qui consiste à appliquer une couche étanche à la vapeur et/ou étanche à l'eau sur le panneau d'isolation thermique (2) sur le côté sensiblement plat du panneau d'isolation thermique (2).

9. Procédé selon l'une quelconque des revendications précédentes, dans lequel une dimension de la feuille de fibrociment (7) est supérieure à une dimension du panneau d'isolation thermique (2) pour permettre une configuration de chevauchement de deux feuilles de fibrociment ondulées isolées (1) ou plus dans la direction longitudinale.
